# EUROPEAN PATENT SPECIFICATION

(11) **EP 2 645 639 B1**
(45) Date of publication and mention of the grant of the patent: **07.10.2015**
(21) Application number: 10859901.0
(22) Date of filing: 24.11.2010
(51) Int. Cl.: H04L 12/28

(54) **COMMUNICATION APPARATUS FOR PROVIDING A NETWORK ACCESS**
KOMMUNIKATIONSGERÄT ZUR BEREITSTELLUNG EINES NETZWERKZUGANGS
APPAREIL DE COMMUNICATION DE FURNITURE D'UN ACCÈS À RÉSEAU

(43) Date of publication of application: 02.10.2013
(73) Proprietor: Mitsubishi Electric Corporation, Tokyo 100-8310 (JP)
(72) Inventor: NISHITANI, Takashi, Tokyo 100-8310 (JP); TSUJI, Akihiro, Tokyo 100-8310 (JP)
(74) Representative: Zech, Stefan Markus
(86) International application number: PCT/JP2010/070925
(87) International publication number: WO 2012/070127

(56) References cited:
- WO-A2-01/61983
- JP-A- 2009 182 440
- JP-A- 2010 166 502
- JP-A- 2010 206 245
- US-A1- 2002 021 711
- US-A1- 2010 002 719
- US-A1- 2010 100 919

## Description

### Field

The present invention relates to a communication apparatus that constitutes a point to multi-point communication system.

### Background

As an example of a point to multi-point communication system, a PON (Passive Optical Network) has been known. In the PON system, interactive communication is performed based on a logical link established between a station-side device and a subscriber device.

In an upstream data transfer in the PON system, TDMA (Time Division Multiple Access) is used, and a burst optical signal is transmitted from each logical link.

The station-side device executes bandwidth allocation control (an instruction of a transmission start time and a transmission duration time of a signal), so that burst optical signals transmitted for each logical link from a subscriber device under control thereof do not collide with each other. The cycle of executing the bandwidth allocation control is referred to as "bandwidth update cycle". In the bandwidth allocation control, the station-side device determines a subscriber device permitted to perform a transmission within the bandwidth update cycle and a time zone (a transmission start time and a transmission duration time) in which the transmission is permitted. Each subscriber device is notified of a determination result and transmits an upstream burst optical signal according to the determination result.

A plurality of logical links can be set between the station-side device and a single subscriber device, and each logical link is given an LLID (Logical Link ID) by the station-side device and identified. In this case, at the time of determining a subscriber device permitted to perform a transmission within the bandwidth update cycle by executing the bandwidth allocation control, the station-side device determines the transmission start time and the transmission duration time for each LLID, that is, for each logical link.

In the transmission of the burst optical signal, an overhead (PON-OH) time including a laser rise time (Lon), a laser fall time (Loff), and a clock synchronization time (SyncTime) and a time for transmitting control information (a header) given to user data are ensured, other than the time for transmitting the user data. The control information includes information such as the LLID.

Furthermore, there is another PON system that reduces power consumption by providing a period during which power feeding is stopped for a user logic that does not need to be operated due to such a reason that there is no transmission of upstream data or the like.

A conventional PON system is disclosed in Patent Literatures 1 and 2. In the PON system described in Patent Literature 1, effective use of an upstream bandwidth is realized by collectively transmitting data frames, which have been transmitted individually in the past. Specifically, when there is a subscriber device that has established a plurality of logical links with the station-side device, the subscriber device connects data frames to be transmitted by each logical link, and transmits these frames as one frame (a burst optical signal), so that the PON-OH (the laser rise time (Lon), the laser fall time (Loff), and the clock synchronization time (SyncTime)) at the time of switching the logical links is not required.

Further, in the PON system described in Patent Literature 2, the subscriber device monitors a communication status between the station-side device and the subscriber device for each communication path, and stops power supply to an optical interface corresponding to a communication path in which communication is not currently performed, thereby realizing power saving.

Document US 2010/100919 A1 discloses a method of reducing and diagnosing upstream ingress noise in a cable data system to provide control in order to mitigate ingress noise problem.

### Citation List

### Patent Literatures

Patent Literature 1: Japanese Patent Application Laid-open No. 2007-116587
Patent Literature 2: Japanese Patent Application Laid-open No. 2007-89027

### Summary

### Technical Problem

However, the conventional PON system described above has the following problems.

According to the technique described in Patent Literature 1, while the bandwidth use efficiency can be improved, the technique focuses on a reduction of the PON-OH, and a reduction of time for transmitting control information included in each data frame is not taken into consideration. That is, the control information including the LLID and the like needs to be transmitted in a data frame of each logical link, and improvement of the bandwidth use efficiency cannot be deemed as sufficient.

According to the technique described in Patent Literature 2, while power saving of the subscriber device is possible, when a plurality of logical links are implemented on the subscriber device, the subscriber device operates at a different time for each logical link, and thus the power feeding stop period becomes short and the power saving effect is degraded.

The present invention has been achieved in view of the above problems, and an object of the present invention is to provide a communication apparatus that can effectively use a bandwidth of a transfer path and can realize a transfer with a lower delay. Another object of the present invention is to provide a communication apparatus that can realize a reduction of power consumption.

### Solution to Problem

The present invention provides a communication apparatus on a subscriber side that, in a point to multi-point communication system, is adapted to transmit upstream data transmitted from a lower-level device to a station-side device based on a data transmission start time and a transmission duration time notified from the station-side device in accordance with independent claim 1. Further embodiments of the invention may be realized in accordance with the dependent claims.

### Advantageous Effects of Invention

The communication apparatus according to the present invention determines the number of logical links to be used in the transmission of upstream data based on an accumulated amount of the upstream data. Accordingly, an overhead and a bandwidth for transmitting control information required for each logical link can be reduced appropriately, thereby enabling to use the bandwidth effectively.

### Brief Description of Drawings

FIG. 1 is a configuration example of a communication system according to a first embodiment.
FIG. 2 is a flowchart of a characteristic operation of a subscriber device according to the first embodiment.
FIG. 3 depicts an upstream data transmitting operation performed by the subscriber device according to the first embodiment.
FIG. 4 is an explanatory diagram of effects of the first embodiment.
FIG. 5 is an explanatory diagram of effects of the first embodiment.
FIG. 6 is a flowchart of a characteristic operation of a subscriber device according to a second embodiment.
FIG. 7 is an explanatory diagram of effects of the second embodiment.
FIG. 8 is an explanatory diagram of effects of the second embodiment.
FIG. 9 is a flowchart of a characteristic operation of a subscriber device according to a third embodiment.
FIG. 10 is a flowchart of an upstream data transmitting operation performed by a subscriber device according to a fourth embodiment.
FIG. 11 is a flowchart of an upstream data transmitting operation performed by the subscriber device according to the fourth embodiment.

### Description of Embodiments

Exemplary embodiments of a communication apparatus according to the present invention will be explained below in detail with reference to the accompanying drawings. The present invention is not limited to the embodiments.

### First embodiment.

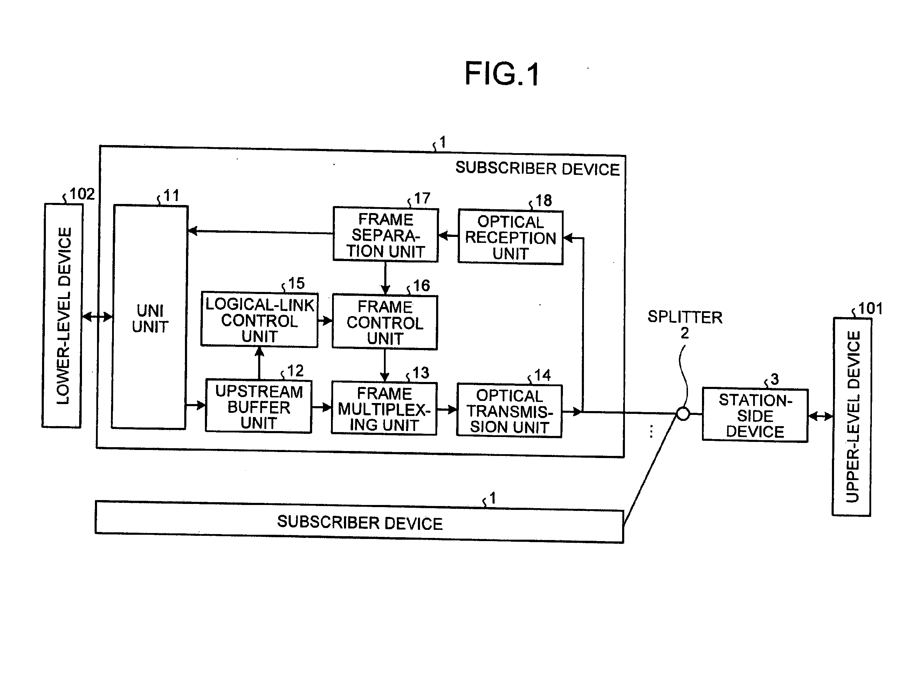

FIG. 1 is a configuration example of a point to multi-point communication system (hereinafter, simply "communication system") according to a first embodiment. As shown in FIG. 1, the communication system according to the present embodiment includes a plurality of subscriber devices 1, a splitter 2, and a station-side device 3, and the subscriber devices 1 is connected to the station-side device 3 via the splitter 2 to constitute a PON system. The station-side device 3 is connected to an upper-level device 101, and a lower-level device 102 is connected to the subscriber device 1.

The subscriber devices 1 have mutually equivalent configuration, and respectively include a UNI unit 11, an upstream buffer unit 12, a frame multiplexing unit 13, an optical transmission unit 14, a frame control unit 16, a frame separation unit 17, an optical reception unit 18, and a logical-link control unit 15.

In the subscriber device 1, the UNI unit 11 receives data from the lower-level device 102, and performs a transmission of downstream data to the lower-level device 102. The UNI unit 11 acts as data reception unit. The upstream buffer unit 12 as a data accumulation unit temporarily accumulates data received from the lower-level device 102. The upstream buffer unit 12 includes a plurality of queues. The logical-link control unit 15 monitors a buffer accumulation amount in the upstream buffer unit 12, and controls the number of logical links according to the monitoring result of the buffer accumulation amount. The frame control unit 16 processes a control frame to be transmitted and received to and from the station-side device 3 according to logical link information notified from the logical-link control unit 15 and the buffer accumulation amount. The frame multiplexing unit 13 reads upstream data (an upstream user frame) stored in the upstream buffer unit 12, and multiplexes the read upstream user frame with the control frame received from the frame control unit 16. The optical transmission unit 14 converts an electric signal output from the frame multiplexing unit 13 to an optical signal, and transmits the optical signal to a transfer path. The optical reception unit 18 converts an optical signal transmitted from the station-side device 3 to an electric signal. The frame separation unit 17 separates various frames included in the electric signal received from the optical reception unit 18 into a downstream user frame and a control frame. The frame separation unit 17 outputs the downstream user frame to the UNI unit 11 and outputs the control frame to the frame control unit 16. The frame multiplexing unit 13 and the optical transmission unit 14 constitute a data transmission unit.

An operation when the station-side device 3 and the subscriber device 1 perform a data transfer in the communication system according to the present embodiment is explained next. An upstream data transfer operation of transmitting data from the subscriber device 1 toward the station-side device 3 is explained below. It is assumed here that a plurality of logical links have been established between the station-side device 3 and the subscriber device 1.

The upstream user frame, which is an upstream data signal transmitted from the lower-level device 102, is received by the UNI unit 11 of the subscriber device 1, and stored in the upstream buffer unit 12 in which an area to be used is set for each queue. The logical-link control unit 15 monitors an accumulated data amount in a buffer area (in each queue) of the upstream buffer unit 12, and determines the number of logical links according to the accumulated data amount in the upstream buffer unit 12 (hereinafter, "buffer accumulation amount"), to notify the frame control unit 16 of the buffer accumulation amount and the determined number of logical links. The number of logical links is the number of logical links to be used for the upstream data transmission in the bandwidth update cycle.

The frame control unit 16 generates a control frame based on a content notified from the logical-link control unit 15 (the buffer accumulation amount and the number of logical links). The generated control frame includes a REPORT frame for notifying an upstream transmission data amount (corresponding to the buffer accumulation amount) to be used for the bandwidth control in the station-side device 3. An upstream bandwidth is allocated by the station-side device 3 by notifying the buffer accumulation amount in the REPORT frame, and the allocation result is notified in a GATE frame. The frame control unit 16 analyzes the control frame received from the frame separation unit 17 to perform a process depending on the content of the control frame. For example, when the control frame is the GATE frame, the frame control unit 16 notifies the frame multiplexing unit 13 of a transmission start time and a transmission duration time for each logical link indicated by the content.

The frame multiplexing unit 13 multiplexes the control frame received from the frame control unit 16 (for example, the REPORT frame) with the upstream data accumulated in the upstream buffer unit 12 (an upstream user frame) and outputs the multiplexed data to the optical transmission unit 14, while taking it into consideration that an upstream burst optical signal is transmitted from the optical transmission unit 14 in a time zone indicated by a GATE frame analysis result acquired by the frame control unit 16 (a period specified by the transmission start time and the transmission duration time). The optical transmission unit 14 converts an electric signal output from the frame multiplexing unit 13 to an optical signal and transmits the optical signal to the station-side device 3.

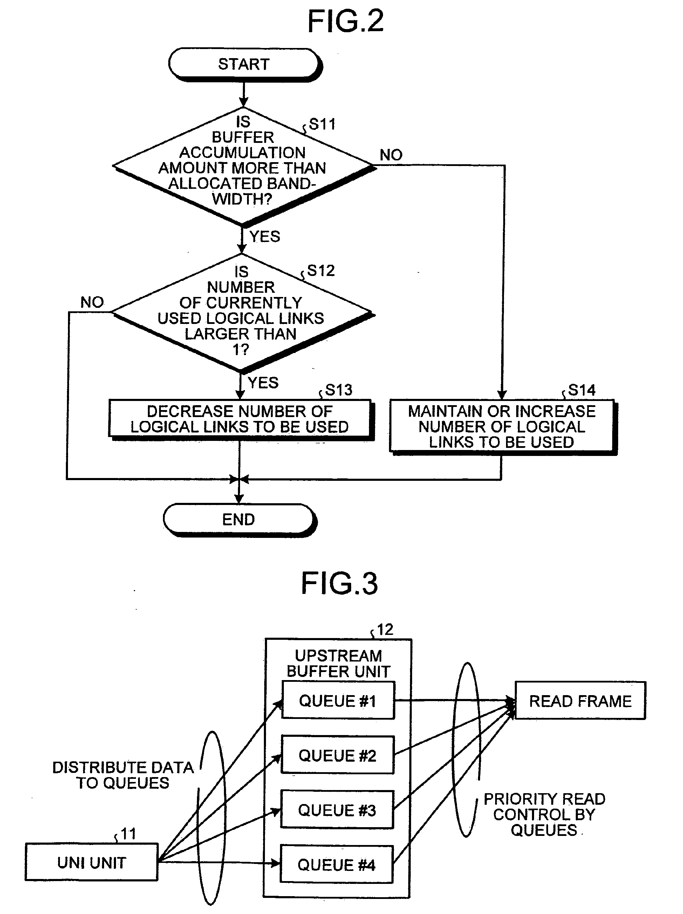

Subsequently, a characteristic operation of the communication apparatus according to the present embodiment is explained with reference to FIGS. 2 and 3.

FIG. 2 is a flowchart of a characteristic operation of the subscriber device 1 according to the first embodiment, which specifically depicts an example of an operation of changing the number of logical links.

As shown in FIG. 2, in the operation of changing the number of logical links, the logical-link control unit 15 compares the total accumulated data amount in the buffer, which is to be transmitted by all the logical links currently used in the subscriber device 1, that is, the accumulated data amount in the upstream buffer unit 12 (the buffer accumulation amount) with the allocated bandwidth (Step S11). The allocated bandwidth is an upstream bandwidth indicated in the GATE frame received as a response to the REPORT frame transmitted last time by the subscriber device 1 (an upstream bandwidth allocated by the station-side device 3).

As a result of a comparison at Step S11, when the buffer accumulation amount is more than the allocated bandwidth (YES at Step S11), and the number of logical links currently used, that is, the number of logical links used in the data transmission in the current bandwidth update cycle is larger than one (YES at Step S12), the logical-link control unit 15 determines to decrease the number of logical links to be used in the data transmission in the next bandwidth update cycle (Step S13). For example, a number obtained by subtracting 1 from the number of logical links currently used is designated as the number of logical links to be used in the next data transmission. When the number of logical links currently used is equal to or more than three, two or more can be subtracted. The number to be decreased can be dynamically changed according to a difference between the buffer accumulation amount and the allocated bandwidth. On the other hand, when the number of logical links currently used is one (NO at Step S12), the logical-link control unit 15 determines to maintain the number of logical links to be used in the data transmission in the next bandwidth update cycle (the operation of changing the number of logical links is finished without performing Step S13). When the buffer accumulation amount is equal to or less than the allocated bandwidth (NO at Step S11), the logical-link control unit 15 determines to maintain the number of logical links currently used, and to use the same number of logical links as in the current transmission in the next data transmission, or to increase the number of logical links to be used in the next data transmission (Step S14). At this time, it is desired to confirm first whether the buffer accumulation amount does not become larger than the allocated bandwidth even if the number of logical links to be used is increased, and to increase the number of logical links to be used, if the buffer accumulation amount does not become larger than the allocated bandwidth. The number to be increased can be one, or two or more. Furthermore, the number to be increased can be dynamically changed according to the difference between the allocated bandwidth and the buffer accumulation amount. The upper limit of the number of logical links to be used becomes the number of logical links being established between the subscriber device 1 and the station-side device 3.

As a result of performing the operation shown in FIG. 2, when it is determined to decrease the number of logical links to be used in the next data transmission, the frame control unit 16 of the subscriber device 1 sets a smaller number of LLIDs than the LLIDs set in the REPORT frame transmitted last time and notifies the buffer accumulation amount (an accumulated data amount in the upstream buffer unit 12), in the next transmission of the REPORT frame to the station-side device 3. At this time, for example, when the number of logical links to be used is two, the LLIDs of these logical links are set in the REPORT frame, and the accumulated data amount in the upstream buffer unit 12 is distributed to each LLID and set. As an example, when it is assumed that the LLIDs of the logical links to be used are respectively LLID#1 and LLID#2, and upstream data having a data amount of X₁, X₂, and X₃ are respectively accumulated in three queues in the upstream buffer unit 12, for example, the accumulated data amount of the LLID#1 is set to X₁+X₂, and the accumulated data amount of the LLID#2 is set to X₃.

On the other hand, when it is determined to increase the number of logical links to be used in the next data transmission, the frame control unit 16 of the subscriber device 1 sets a larger number of LLIDs than the LLIDs set in the REPORT frame transmitted last time and notifies the buffer accumulation amount in the next transmission of the REPORT frame to the station-side device 3. At this time, for example, when the number of logical links to be used is one, the frame control unit 16 sets only the LLID of this logical link in the REPORT frame, and sets the accumulated data amount in the upstream buffer unit 12 (the total value of the data amounts accumulated in the respective queues in the upstream buffer unit 12). When the number of logical links to be used is two or more, the frame control unit 16 sets the LLIDs of the respective logical links to be used in the REPORT frame, and distributes and sets the accumulated data amount in the upstream buffer unit 12 to each LLID, in the same manner as "when it is determined to decrease the number of logical links".

When a data transmission is newly started, specifically, when data is received from the lower-level device 102 in such a state where a bandwidth for the upstream data transmission has not been allocated for a while because the accumulated data amount in the upstream buffer unit 12 is 0, because the buffer accumulation amount cannot be compared with the allocated bandwidth, the subscriber device 1 uses the number of logical links determined based on only an accumulated state of data in the upstream buffer unit 12. That is, the LLID and the buffer accumulation amount are set in the REPORT frame for requesting an allocation of an upstream bandwidth in the same control as the conventional general control.

FIG. 3 depicts an upstream data transmitting operation performed by the subscriber device 1 according to the first embodiment, which specifically depicts an example of an operation in which upstream data is received from the lower-level device 102 and accumulated in the upstream buffer unit 12, and the frame multiplexing unit 13 reads the upstream data accumulated in the upstream buffer unit 12.

As shown in FIG. 3, in the subscriber device 1, the UNI unit 11 having received the upstream data from the lower-level device 102 performs only a queue allocation and stores the upstream data in the upstream buffer unit 12, without associating the received data with a logical link. That is, a batch of received upstream data (user frames) is stored in any of queues constituting the upstream buffer unit 12 according to the type or the like. A priority is allocated to each queue. The frame multiplexing unit 13 performs expedited read according to the priority given to the queue at the time of reading the user frame, without taking the logical link number (LLID) and the number of logical links to be used into consideration.

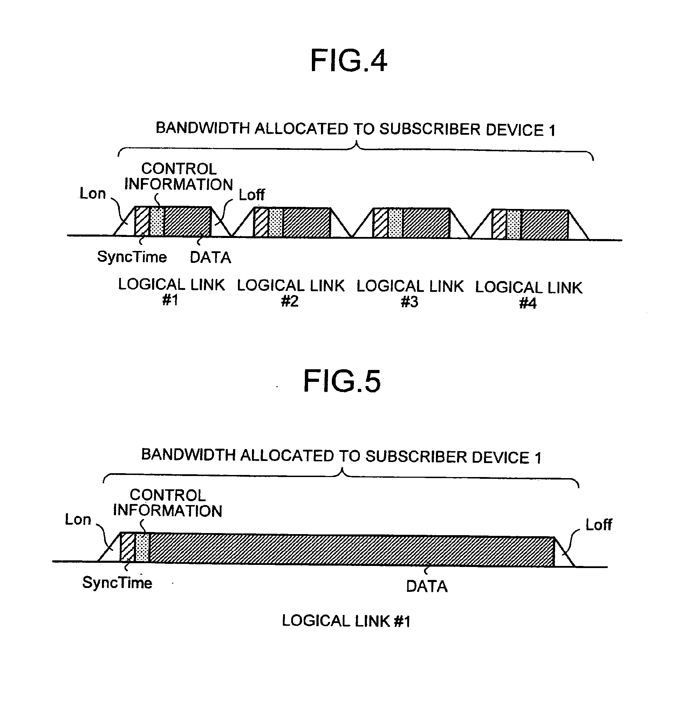

Effects of the present embodiment are explained with reference to FIGS. 4 and 5. A case where the logical links established between the station-side device and the subscriber device are four, that is, the LLID #1 to a LLID #4 is considered here. Because the subscriber device in the conventional communication system accumulates the upstream data in association with any of the logical links (LLIDs), when the upstream data to be transmitted by each logical link is accumulated in the subscriber device, the subscriber device always transmits a REPORT frame in which the LLID #1 to the LLID #4 and the accumulated data amount corresponding to each of the LLID #1 to the LLID #4 are set. As a result, because a bandwidth is allocated to each logical link individually, a burst optical signal to be transmitted from the subscriber device to the station-side device becomes as shown in FIG. 4, and an overhead including the laser rise time (Lon), a laser fall time (Loff), and a clock synchronization time (SyncTime), and a transmission time of the control information are required for each logical link. On the other hand, because the subscriber device 1 according to the present embodiment transmits the upstream data without taking into consideration the LLID or the number of logical links established with the station-side device 3 as described above, when the number of logical links to be used is set to one, the subscriber device 1 sets one LLID of the logical link to be used and the accumulated data amount associated with the LLID in the REPORT frame, and transmits the REPORT frame. As a result, a bandwidth is allocated to one logical link, and a burst optical signal transmitted from the subscriber device 1 to the station-side device 3 becomes as shown in FIG. 5. Accordingly, the overhead including the laser rise time (Lon), the laser fall time (Loff), and the clock synchronization time (SyncTime), and the transmission time of the control information can be reduced as compared to the conventional case, and the bandwidth can be efficiently used. The time required for transmitting the control information is less than a case where control described in Patent Literature 1 mentioned above is applied, thereby enabling to improve the use efficiency of the bandwidth.

While an example of setting an area to be used of an upstream buffer for each queue with regard to one lower-level device has been explained in the above explanations, the present embodiment can be also applied to a plurality of lower-level devices. When the number of lower-level devices is plural, the lower-level device, which is a data transmission source, is identified by, for example, a method described below, thereby enabling to execute the same control.

(Method a) A VLAN tag is given to a user frame transmitted from a lower-level device to identify a lower-level device.

(Method b) A plurality of buffer areas are provided in the upstream buffer unit 12, and a user frame transmitted from a lower-level device is stored in a queue in a buffer area different for each lower-level device according to the priority. Data can be read from each upstream buffer area either in a unit of queue or in a unit of lower-level device.

(Method c) A user frame transmitted from a lower-level device is directly mapped and stored in a queue in the upstream buffer unit 12.

As described above, in the communication system according to the present embodiment, the subscriber device compares the accumulated amount of the upstream data with the upstream bandwidth allocated from the station-side device. When the accumulated amount of the upstream data is more than the upstream bandwidth and the number of logical links currently used is two or more, the subscriber device decreases the number of LLIDs set in the REPORT frame to be transmitted at the time of requesting a bandwidth allocation next time than the number of LLIDs last time. Accordingly, the overhead (PON-OH) and the bandwidth (time) for transmitting the control information required for each logical link can be appropriately reduced, and the bandwidth can be efficiently used. Further, the upstream data can be efficiently transmitted in a short cycle by increasing the logical links when the upstream traffic is less, thereby enabling to reduce a delay time. For example, when a plurality of types of upstream data are accumulated in the upstream buffer unit 12 in a state with the number of logical links to be used being one, because the upstream data having a higher priority is sequentially read and transmitted, a time until the upstream data having the lowest priority is read becomes long. On the other hand, when a plurality of logical links are used, because the upstream data having a high priority and the upstream data having a low priority can be allocated to different logical links and transmitted, the delay time can be reduced in view of the entire system.

Furthermore, because priority control by the queues is executed without associating data with the logical link at the time of write and read of the user frame, the internal configuration of the upstream buffer unit 12 does not need to be changed at the time of changing the number of logical links to be used, and flexible operation can be performed.

In the present embodiment, a method of improving the bandwidth use efficiency when assuming a system in which the station-side device allocates an upstream bandwidth for each logical link and the subscriber device operates faithfully according to the determination result (the allocation result of the upstream bandwidth) by the station-side device has been explained. However, when a system in which the station-side device flexibly receives the upstream data, identical effects can be achieved by performing procedures different from those described above. Specifically, in a case where after the station-side device specifies a plurality of logical links with respect to a single subscriber device and allocates an upstream bandwidth, the station-side device operates to receive a signal normally even if the signal is transmitted over a time longer than the allocated transmission duration time by one logical link, unless the total of bandwidths allocated to the subscriber device is not exceeded (unless the subscriber device performs a transmission by using a bandwidth allocated to another subscriber device), the subscriber device can improve the bandwidth use efficiency by flexibly using the total value of the bandwidth allocated to each logical link.

For example, when the station-side device permits a transmission with respect to a logical link #1 of one subscriber device at a time t₁ to a time t₂, and permits a transmission with respect to a logical link #2 thereof at the time t₂ to a time t₃, if the subscriber device detects that the buffer accumulation amount is more than the allocated bandwidth by performing a process corresponding to Step S11 described above, the subscriber device performs the transmission by the logical link #1 over the time from t₁ to t₃. At the time of changing the number of logical links to be used, because the subscriber device does not need to set the LLID of the logical link to be used after the change in the REPORT frame and notify it, the control procedure can be simplified, and a flexible operation can be performed. Furthermore, a time since a determination to decrease the number of logical links to be used until the transmission is started according to the determination result (a transmission with the number of logical links being decreased) can be reduced.

### Second embodiment.

A second embodiment is explained next. In the first embodiment described above, a method of changing the number of logical links to be used in order to improve the bandwidth use efficiency and reduce the delay time has been explained. On the other hand, in the present embodiment, a method of controlling the number of logical links in order to reduce power consumption is explained. Configurations of the communication system and the subscriber device according to the present embodiment are similar to those of the first embodiment (see FIG. 1).

A different point between the subscriber device 1 according to the present embodiment and the subscriber device 1 explained in the first embodiment is an operation performed by the logical-link control unit 15, and operations of other constituent elements are similar to those of the first embodiment. In the present embodiment, only elements different from the first embodiment are explained.

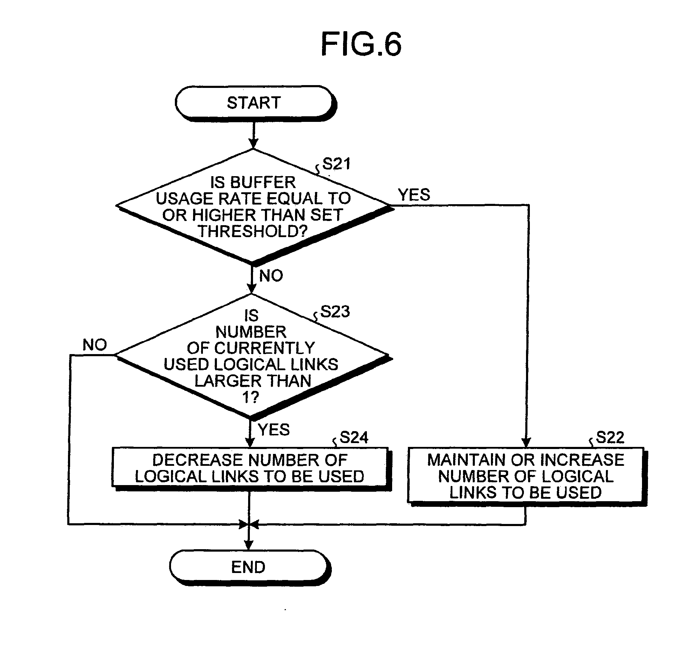

FIG. 6 is a flowchart of a characteristic operation of the subscriber device 1 according to the second embodiment, which depicts an example of an operation of changing the number of logical links in the subscriber device 1 similarly to FIG. 2, which has been used for explanations of the first embodiment.

As shown in FIG. 6, in the operation of changing the number of logical links according to the present embodiment, the logical-link control unit 15 first compares a buffer usage rate of the upstream buffer unit 12 with a preset threshold (Step S21). The logical-link control unit 15 calculates the buffer usage rate based on the accumulated data amount in the upstream buffer unit 12 (a buffer accumulation amount) and the buffer capacity of the upstream buffer unit 12. A method of determining a threshold of the buffer usage rate is described later.

As a result of a comparison at Step S21, when the buffer usage rate is equal to or higher than the threshold (YES at Step S21), the logical-link control unit 15 determines to maintain the number of logical links currently used and use the same number of logical links as in the current transmission at the time of the next data transmission, or determines to increase the number of logical links to be used in the next data transmission (Step S22). When the buffer usage rate is high, because the buffer accumulation amount is large, if the number of logical links to be used is small, the delay time at the time of a data transmission becomes long as compared to a case where the buffer usage rate is low. Therefore, the number of logical links to be used is increased to reduce the delay time. At Step S22, the logical-link control unit 15 can confirm whether the buffer accumulation amount (an accumulated data amount in the upstream buffer unit 12) does not become larger than the allocated bandwidth due to an increase in the number of logical links to be used, and if the number of logical links does not become larger than the allocated bandwidth, the logical-link control unit 15 can increase the number of logical links. On the other hand, when the buffer usage rate is lower than the threshold (NO at Step S21), and the number of logical links currently used is larger than one (YES at Step S23), the logical-link control unit 15 determines to decrease the number of logical links to be used in the data transmission in the next bandwidth update cycle (Step S24). When the number of logical links currently used is one (NO at Step S23), the logical-link control unit 15 determines to maintain the number of logical links to be used in the data transmission in the next bandwidth update cycle (to finish the operation of changing the number of logical links without performing Step S24). When the buffer usage rate is low, because the buffer accumulation amount is small, even if the number of logical links to be used is small, the delay time at the time of a data transmission does not increase so much. Therefore, the number of logical links to be used is decreased to reduce the power consumption.

In the transmission of the REPORT frame after the operation of changing the number of logical links is performed and the number of logical links to be used at the time of a next data transmission is determined, the number of LLIDs according to the determination result is set in the REPORT frame. This operation is similar to the operation in the communication system explained in the first embodiment.

The method of determining a threshold to be used in the operation of changing the number of logical links is explained below. As the method of determining a threshold, for example, (Method a) to (Method d) described below can be considered.

(Method a) A threshold is determined according to a power-saving-mode set value.

In this method, a threshold is set according to the length of a set period of the power saving state, specifically, when the period is long, the threshold is set high and when the period is short, the threshold is set low. The period of the power saving state is a period since a shift to the power saving state (a state where a transmission to the station-side device 3 is not performed) until the power saving state is released. The period of the power saving state is set, for example, in a unit of bandwidth update cycles. That is, the period of the power saving state becomes the length of an integral multiple of the bandwidth update cycle. For example, when the upstream data is not accumulated in the upstream buffer unit 12, the station-side device 3 shifts to the power saving state, and stops the transmitting operation in the period of the length indicated by the power-saving-mode set value. The state of the upstream buffer unit 12 is confirmed at a point in time when the period is finished, and the power saving state is finished if the upstream data is accumulated, and a bandwidth for transmitting the upstream data is requested to the station-side device 3. When the power saving mode is set, such an operation is performed. Therefore, when the period of the power saving state is long, the upstream data received from the lower-level device 102 during the period is not transmitted to the station-side device 3, and is continuously accumulated in the upstream buffer unit 12. As a result, the buffer accumulation amount is increased and the buffer usage rate becomes high (a mean value of the buffer usage rate increases as the period of the power saving state becomes long). Accordingly, when the period is long, the threshold is set high. In the present embodiment, while details thereof are described later, when the buffer usage rate is lower than the threshold, control for improving the power saving effect is performed by decreasing the number of logical links to be used. On the other hand, when the number of logical links to be used is decreased, the delay time tends to increase, as explained in the present embodiment. Therefore, when a priority is given to the improvement of the power saving effect, the threshold is set to a higher value, while taking the period of the length indicated by the power-saving-mode set value into consideration. When it is desired to avoid that the delay time increases (a priority is given to a reduction of the delay time), it suffices to set the threshold to a lower value, while taking the period of the length indicated by the power-saving-mode set value into consideration.

(Method b) A threshold is determined according to a guaranteed minimum bandwidth of an SLA (service level agreement) parameter.

In this method, when the guaranteed minimum bandwidth is high, a threshold is set high, and when the guaranteed minimum bandwidth is low, the threshold is set low. When the guaranteed minimum bandwidth is high, it is assumed that the data amount of the upstream data transmitted from the lower-level device 102 becomes large, and that the buffer usage rate increases (because the buffer capacity itself does not change). Accordingly, when the priority is given to the improvement of the power saving effect, it suffices that the threshold is set to a higher value, while taking the value of the guaranteed minimum bandwidth into consideration, and when the priority is given to a reduction of the delay time, it suffices that the threshold is set to a lower value, while taking the value of the guaranteed minimum bandwidth into consideration.

(Method c) A threshold is determined according to the delay class of the SLA parameter.

In this method, when the delay class is a low delay, a threshold is set low, and when the delay class is not a low delay, the threshold is set high. When the delay class is a low delay, if the buffer usage rate tends to be determined to be lower than the threshold (if the number of logical links to be used is likely to be decreased), the threshold is set to a lower value as described above, because the delay time increases. On the other hand, when the delay class permits a delay, the threshold is set to a higher value so that the number of logical links to be used can be easily decreased to improve the power saving effect.

(Method d) A threshold is determined according to an upstream transfer rate (1G/10G) of the subscriber device 1.

In this method, when the upstream transfer rate is low, a threshold is set high, and when the upstream transfer rate is high, the threshold is set low. When the upstream transfer rate is low, a delay does not become a problem, and thus the threshold is set to a higher value as described above, in order that the number of logical links to be used can be easily decreased to improve the power saving effect.

Two or more conditions can be combined and used. For example, the threshold of the buffer usage rate can be determined based on the power-saving-mode set value and the guaranteed minimum bandwidth.

In the above explanations, it is determined whether to change the logical link to be used based on the comparison result between the buffer usage rate and the threshold. The buffer usage rate is calculated based on the buffer capacity and the buffer accumulation amount. However, because the buffer capacity is fixed, the buffer usage rate fluctuates depending on only the buffer accumulation amount. Accordingly, in the above operation (the operation of changing the number of logical links shown in FIG. 6), the buffer accumulation amount can be used instead of the buffer usage rate.

Furthermore, at the time of determining the threshold, the threshold can be determined by taking it into consideration as to which is prioritized, that is, a reduction of the transmission delay time of the upstream data or power saving. In the method of determining the threshold described above, when the priority is given to the reduction of the transmission delay time, it suffices that the threshold is adjusted to be high. On the other hand, when the priority is given to a reduction of power consumption, it suffices that the threshold is adjusted to be low.

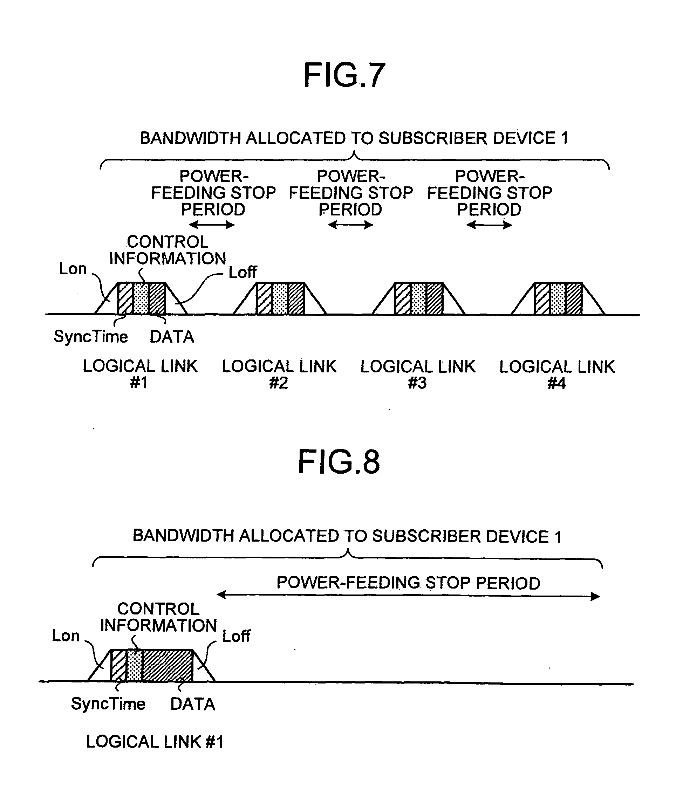

As described above, in the communication system according to the present embodiment, the subscriber device compares the use rate of the buffer that accumulates the upstream data with a threshold. When the use rate is lower than the threshold, and the number of the logical links currently used is two or more, the number of the LLIDs to be set in the REPORT frame transmitted at the time of requesting the bandwidth allocation next time is decreased than last time. Accordingly, an operating time of various devices involved with the data transmitting operation can be reduced, and improvement of the power saving effect can be expected (see FIGS. 7 and 8).

FIG. 7 is a transmitting operation example in a case where a plurality of logical links (in this example, four logical links) are used. FIG. 8 is a transmitting operation example in a case where a single logical link is used. As FIGS. 7 and 8 are compared, it is understood that the PON-OH (the laser rise time (Lon), the laser fall time (Loff), and the clock synchronization time (SyncTime)) and the transmission time of the control information are reduced by decreasing the number of logical links to be used. That is, when data having the same size is to be transmitted, if the number of logical links to be used is decreased, the power-feeding stop period (when there are a plurality of power-feeding stop periods, the total value thereof) indicating a period that can be shifted to a low power consumption state (a state where the operation of the devices involved with the data transmitting operation is stopped) becomes long, and the power saving effect can be improved. The low power consumption state mentioned here is different from the power saving state in the "method of determining the threshold according to the power-saving-mode set value (Method a)".

### Third embodiment.

A third embodiment is explained next. In the first and second embodiments described above, the method of changing the number of logical links to be used in order to improve the bandwidth use efficiency and reduce the delay time, or to improve the power saving effect is explained. On the other hand, in the present embodiment, a method of controlling the number of logical links, which satisfies both of improvement of the bandwidth use efficiency and improvement of the power saving effect, is described. Configurations of the communication system and the subscriber device according to the present embodiment are similar to those of the first embodiment (see FIG. 1).

A different point between the subscriber device 1 according to the present embodiment and the subscriber device 1 explained in the first and second embodiments is an operation performed by the logical-link control unit 15, and operations of other constituent elements are similar to those of the first embodiment. In the present embodiment, only elements different from the first embodiment are explained.

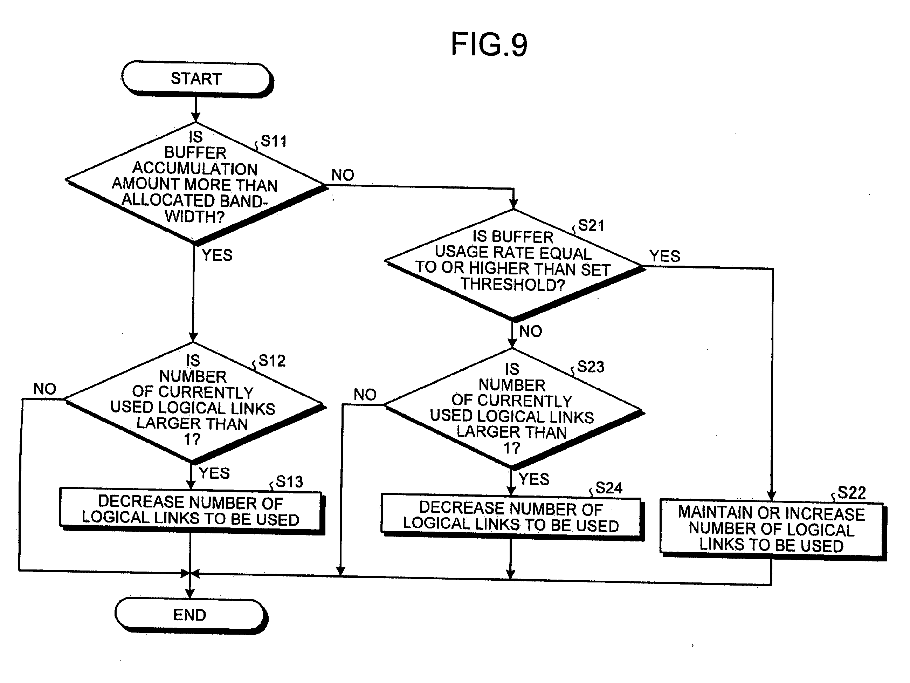

FIG. 9 is a flowchart of a characteristic operation of the subscriber device 1 according to the third embodiment, which depicts an example of an operation of changing the number of logical links in the subscriber device 1, as in FIGS. 2 and 6 used for explanations of the first and second embodiments. In FIG. 9, processes similar to the processes explained in the first or second embodiment are denoted by like step numbers.

As shown in FIG. 9, in the operation of changing the number of logical links according to the present embodiment, the logical-link control unit 15 first compares the accumulated data amount in the upstream buffer unit 12 (a buffer accumulation amount) with the allocated bandwidth (Step S11). As a result of a comparison at Step S11, when the buffer accumulation amount is more than the allocated bandwidth (YES at Step S11), and the number of logical links currently used, that is, the number of logical links used in the data transmission at hand is larger than one (YES at Step S12), the logical-link control unit 15 determines to decrease the number of logical links to be used in the data transmission in the next bandwidth update cycle (Step S13).

On the other hand, when the buffer accumulation amount is equal to or less than the allocated bandwidth (NO at Step S11), the logical-link control unit 15 compares the buffer usage rate of the upstream buffer unit 12 with a preset threshold (Step S21). The threshold is determined by the method explained in the second embodiment. The logical-link control unit 15 performs Steps S22, S23, and S24 explained in the second embodiment, according to the comparison result at Step S21.

In this manner, in the communication system according to the present embodiment, the operation combining the control procedure (FIG. 2) explained in the first embodiment and the control procedure (FIG. 6) explained in the second embodiment is performed to change the number of logical links to be used. Specifically, when the buffer accumulation amount is more than the allocated bandwidth, the overhead and the bandwidth for transmitting the control information required for each logical link are reduced to increase the bandwidth for transmitting the upstream data, by reducing the number of logical links to be used so that more pieces of upstream data can be transmitted. When the buffer accumulation amount is equal to or less than the allocated bandwidth and the buffer usage rate (the buffer accumulation amount) is lower than the threshold, because the buffer accumulation amount is small and the transmission delay time of the upstream data does not increase so much, the power-feeding stop period (see FIGS. 7 and 8) is set long, and the overhead and the like are reduced by decreasing the number of logical links to be used, so that the power consumption can be reduced. Furthermore, when the buffer accumulation amount is equal to or less than the allocated bandwidth and the buffer usage rate is equal to or higher than the threshold, the transmission delay time of the upstream data may cause a problem. Therefore, to avoid an increase of the transmission delay time, the number of logical links to be used is maintained or increased. Accordingly, both of efficient use of the bandwidth and power saving can be achieved.

### Fourth embodiment.

A fourth embodiment is explained next. In the first embodiment described above, the method in which the upstream data from the lower-level device is not distributed to the logical links, and data is read and transmitted by the queue control has been explained. On the other hand, in the present embodiment, such a method is explained that the upstream data from the lower-level device is managed for each logical link, and read control is executed in order to control the bandwidth for each logical link. Configurations of the communication system and the subscriber device according to the present embodiment are simlar to those of the first embodiment (see FIG. 1).

In the communication system according to the present embodiment, an upstream data signal transmitted from the lower-level device 102 is received by the UNI unit 11 of the subscriber device 1, and stored in the upstream buffer unit 12 in which an area to be used is set for each logical link (that includes a plurality of areas to be used, which are associated in a one-to-one relation with each logical link). The logical-link control unit 15 monitors the accumulated data amount in the buffer area of the upstream buffer unit 12, and determines the number of logical links according to the accumulated data amount in the upstream buffer unit 12 (the buffer accumulation amount), to notify the frame control unit 16 of the buffer accumulation amount and the determined number of logical links. The frame control unit 16 generates a control frame based on the content (the buffer accumulation amount and the number of logical links) notified from the logical-link control unit 15. The frame multiplexing unit 13 multiplexes the control frame received from the frame control unit 16 with the upstream user frame, which is the upstream data accumulated in the upstream buffer unit 12, and outputs the multiplexed data to the optical transmission unit 14, while taking it into consideration that the upstream burst optical signal is transmitted from the optical transmission unit 14 in a time zone indicated by the GATE frame analysis result acquired by the frame control unit 16 (a period specified by the transmission start time and the transmission duration time). The optical transmission unit 14 converts an electric signal output from the frame multiplexing unit 13 to an optical signal, and transmits the optical signal to the station-side device 3.

The operation of changing the number of logical links is performed according to the flowchart in FIG. 2, FIG. 6, or FIG. 9, which have been respectively described in the first to third embodiments.

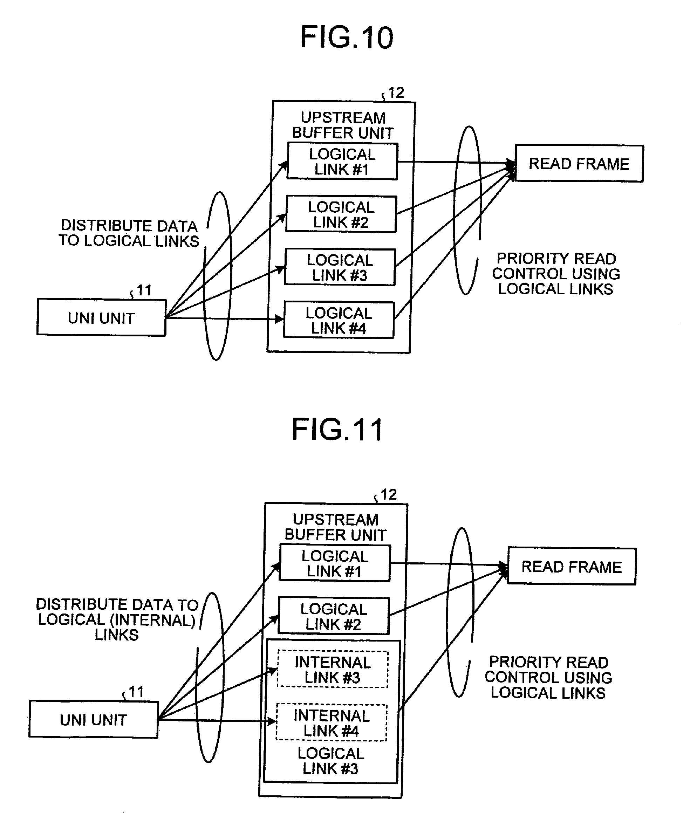

FIG. 10 is a figure of an upstream data transmitting operation performed by the subscriber device 1 according to the fourth embodiment, which specifically depicts an example of an operation in which upstream data is received from the lower-level device 102 and the frame multiplexing unit 13 reads the upstream data accumulated in the upstream buffer unit 12. FIG. 10 depicts an operation in a state where the number of logical links to be used is not reduced (an operation when the subscriber device 1 uses all the logical links to transmit data).

As shown in FIG. 10, in the subscriber device 1, when the subscriber device 1 uses all the logical links to transmit the data, the UNI unit 11 having received the upstream data from the lower-level device 102 stores the received upstream data in a corresponding area in the upstream buffer unit 12, specifically, in the area to be used associated with the logical link for transmitting the received upstream data. When the user frame is to be read, the frame multiplexing unit 13 reads the user frame from the area (the area to be used) associated with the logical link having the LLID set in the GATE frame indicating a bandwidth allocation result received from the station-side device 3.

In FIG. 10, an operation example in a case where the area to be used is set for each logical link for one subscriber device 1 is shown. However, the operation example is applicable to a plurality of subscriber devices 1. When there are a plurality of lower-level devices, the identical control can be executed by identifying a lower-level device, which is a data transmission source, by a method described below.

(Method a) A VLAN tag is given to a user frame transmitted from a lower-level device to identify a lower-level device.

(Method b) A user frame transmitted from a lower-level device is stored in an upstream buffer area different for each lower-level device.

(Method c) A user frame transmitted from a lower-level device is mapped on a logical link and stored in an area to be used associated with each logical link.

FIG. 11 is a figure of an upstream data transmitting operation performed by the subscriber device 1 according to the fourth embodiment, which specifically depicts an example of an operation in which upstream data is received from the lower-level device 102 and the frame multiplexing unit 13 reads the upstream data accumulated in the upstream buffer unit 12, as in FIG. 10. However, FIG. 11 depicts an operation in a state where the number of logical links to be used is reduced, and the frame multiplexing unit 13 uses three logical links (the logical links #1 to #3) of four logical links established between the station-side device and the subscriber device.

In the operation example shown in FIG. 11, an operation of accumulating the upstream data received from the lower-level device 102 in the upstream buffer unit 12 is similar to the operation in the state where the number of logical links to be used is not reduced (the operation shown in FIG. 10).

On the other hand, when the user frame is read from the upstream buffer unit 12, the frame multiplexing unit 13 handles the buffer area of the reduced logical link (a logical link not to be used) as a buffer area of an internal link, that is, as a buffer of another logical link. In the example shown in FIG. 11, the buffer area associated with an unused logical link #4 is regarded as a part of the buffer area associated with the logical link #3 to perform read.

In data read, for example, the priority control for each logical link is executed. When it is assumed that a plurality of the buffer areas are associated with one logical link (when the number of logical links to be used is decreased) and identification of each buffer area is required, for example, the following methods are used.

(Method a) A VLAN tag different for each buffer area is given to a data frame read from each buffer area associated with the same logical link to identify a buffer area.

(Method b) In a logical link, a transmission time of data in the respective buffer areas associated with the logical link is determined, and a control signal for a reception side to identify the transmission time of data for each buffer area is transmitted at the time of starting the transmission. As the control signal, for example, an extended OAM frame can be used. However, another frame or another control signal can be used. Furthermore, a signal can be transmitted for each buffer area or signals for all the buffer areas can be coordinated and transmitted as one signal.

Furthermore, when a buffer size of a part of the logical link is small with respect to the bandwidth allocated to each logical link of one subscriber device, and when there is a surplus in the bandwidth allocated to the part of the logical link, data accumulated in the buffer of another logical link can be transmitted by using the logical link having the surplus bandwidth.

In this manner, the subscriber device 1 according to the present embodiment accumulates the upstream data in the buffer area for each logical link established between the station-side device and the subscriber device, in the upstream buffer unit 12. When the accumulated data is to be read, the subscriber device 1 handles the buffer area depending on the logical links currently used at that time, specifically, handles a buffer area associated with an unused logical link as a part of a buffer area associated with any of the logical links currently used, and performs data read for all the buffer areas including the buffer area associated with the unused logical link. Even when such a buffer management method is used, effects identical to those of the first to third embodiments can be achieved.

### Industrial Applicability

As described above, the communication apparatus according to the present invention is useful for a subscriber device in a point to multi-point communication system, and the communication apparatus is particularly suitable for a subscriber device that can set a plurality of logical links between a station-side device and a subscriber device.

### Reference Signs List

- 1: subscriber device
- 2: splitter
- 3: station-side device
- 11: UNI unit
- 12: upstream buffer unit
- 13: frame multiplexing unit
- 14: optical transmission unit
- 15: logical-link control unit
- 16: frame control unit
- 17: frame separation unit
- 18: optical reception unit
- 101: upper-level device
- 102: lower-level device

## Claims

1. A communication apparatus (1) on a subscriber side that, in a point to multi-point communication system, is adapted to transmit upstream data transmitted from a lower-level device (102) to a station-side device (3) based on a data transmission start time and a transmission duration time notified from the station-side device (3), the communication apparatus (1) comprising:
a data accumulation unit (12) that is adapted to accumulate upstream data to be transmitted to the station-side device (3); and
a logical-link control unit (15) that is adapted to determine a number of links to be used, which is the number of logical links to be used for an upstream data transmission in a next bandwidth update cycle, based on an accumulated data amount in the data accumulation unit (12), wherein the logical-link control unit (15) is further adapted to compare the accumulated data amount with an allocated bandwidth which is an upstream bandwidth allocated in a current bandwidth update cycle, adjust a number of links currently used which is the number of logical links currently used for an upstream data transmission in the current bandwidth update cycle, and designate the adjusted value as the number of links to be used.

2. The communication apparatus according to claim 1, wherein when the accumulated data amount is more than the allocated bandwidth and the number of links currently used is two or more,
the logical-link control unit (15) is adapted to designate a number obtained by subtracting a predetermined positive integer from the number of links currently used as the number of links to be used.

3. The communication apparatus according to claim 1 or 2, wherein when the accumulated data amount is equal to or less than the allocated bandwidth,
the logical-link control unit (15) is adapted to designate the number of links currently used as the number of links to be used.

4. The communication apparatus according to claim 1 or 2, wherein when the accumulated data amount is equal to or less than the allocated bandwidth,
the logical-link control unit (15) is adapted to designate a number obtained by adding a preset positive integer to the number of links currently used as the number of links to be used.

5. The communication apparatus according to claim 1, wherein the logical-link control unit (15) is adapted to compare a buffer usage rate which is calculated based on the accumulated data amount and a buffer capacity of the data accumulation unit, with a predetermined threshold.

6. The communication apparatus (1) according to claim 5, wherein when the accumulated data amount is more than the allocated bandwidth and the number of links currently used is two or more,
the logical-link control unit (15) is adapted to designate a number obtained by subtracting a predetermined positive integer from the number of links currently used as the number of links to be used.

7. The communication apparatus (1) according to claim 5 or 6, wherein when the accumulated data amount is equal to or less than the allocated bandwidth, the buffer usage rate is lower than a predetermined threshold, and the number of links currently used is two or more,
the logical-link control unit (15) is adapted to designate a number obtained by subtracting a predetermined positive integer from the number of links currently used as the number of links to be used.

8. The communication apparatus according to any one of claims 5 to 7, wherein the predetermined threshold is a value determined based on at least one piece of information among a length of a period in a power saving state when a power saving mode is set, a guaranteed minimum bandwidth parameter in a service level agreement, a delay class parameter in a service level agreement, and a corresponding upstream transfer rate of the communication apparatus.

9. The communication apparatus according to any one of claims 1 to 8, wherein the data accumulation unit (12) is configured to include a plurality of queues for which a priority is set, and the communication apparatus (1) further comprises:
a data reception unit (17, 18) that, when upstream data is received from the lower-level device (102), is adapted to store the received upstream data in one of the queues in the data accumulation unit; and
a data transmission unit (13, 14) that is adapted to read and transmit upstream data accumulated in the data accumulation unit according to a priority set in the queues.

10. The communication apparatus according to any one of claims 1 to 8, wherein the data accumulation unit (12) is configured to include a plurality of buffer areas which are associated in a one-to-one relation with each respective logical link to be used in a data transmission to the station-side device (3), and the communication apparatus (1) further comprises:
a data reception unit (17, 18) that, when upstream data is received from the lower-level device (102), is adapted to store the received upstream data in one of the buffer areas in the data accumulation unit (12); and
a data transmission unit (13, 14) that is adapted to read and transmit upstream data accumulated in the data accumulation unit (12) by a procedure according to a determination result of the number of links to be used acquired by the logical-link control unit, and wherein
the data transmission unit (13, 14) is adapted to allocate each upstream data read from the data accumulation unit to a corresponding logical link (12), and use, when at a time of an allocation to a corresponding specific logical link of all pieces of the upstream data corresponding to the specific logical link there is a surplus bandwidth of the corresponding specific logical link, the surplus bandwidth in the corresponding specific logical link for a transmission of upstream data corresponding to another logical link.

## Patentansprüche

1. Kommunikationsvorrichtung (1) auf einer Teilnehmerseite, die in einem Punktzu-Mehrpunkt-Kommunikationssystem dazu angepasst ist, Upstream-Daten, die von einer auf niedrigerer Ebene angesiedelten Einrichtung (102) her übertragen werden, an eine stationsseitige Einrichtung (3), auf Grundlage einer von der stationsseitigen Einrichtung (3) mitgeteilten Datenübertragungsbeginnzeit und Datenübertragungszeitdauer zu übertragen, wobei die Kommunikationsvorrichtung (1) umfasst:
eine Datensammeleinheit (12), die dazu angepasst ist, Upstream-Daten zu sammeln, die an die stationsseitige Einrichtung (3) übertragen werden sollen; und
eine Logikverbindungssteuereinheit (15), die dazu angepasst ist, eine Anzahl von zu verwendenden Verbindungen, bei der es sich um die Anzahl von Logikverbindungen handelt, die für eine Upstream-Datenübertragung in einem nächsten Bandbreitenaktualisierungszyklus verwendet werden sollen, auf Grundlage einer in der Datensammeleinheit (12) angesammelten Datenmenge zu bestimmen, wobei die Logikverbindungssteuereinheit (15) darüber hinaus dazu angepasst ist, die angesammelte Datenmenge mit einer zugeteilten Bandbreite zu vergleichen, bei der es sich um eine in einem aktuellen Bandbreitenaktualisierungszyklus zugeteilte Upstream-Bandbreite handelt, eine Anzahl von aktuell verwendeten Verbindungen anzupassen, bei der es sich um die Anzahl aktuell für eine Upstream-Datenübertragung im aktuellen Bandbreitenaktualisierungszyklus verwendeter Logikverbindungen handelt, und den angepassten Wert als die Anzahl von zu verwendenden Verbindungen zu bestimmen.

2. Kommunikationsvorrichtung nach Anspruch 1, wobei, wenn die angesammelte Datenmenge größer ist als die zugeteilte Bandbreite und die Anzahl aktuell verwendeter Verbindung zwei oder mehr beträgt,
die Logikverbindungssteuereinheit (15) dazu angepasst ist, eine Anzahl, die erhalten wird, indem eine vorbestimmte positive ganze Zahl von der Anzahl aktuell verwendeter Verbindungen subtrahiert wird, als die Anzahl von zu verwendenden Verbindungen zu bestimmen.

3. Kommunikationsvorrichtung nach Anspruch 1 oder 2, wobei, wenn die angesammelte Datenmenge gleich der zugeteilten oder kleiner als die zugeteilte Bandbreite ist,
die Logikverbindungssteuereinheit (15) dazu angepasst ist, die Anzahl aktuell verwendeter Verbindungen als die Anzahl zu verwendender Verbindungen zu bestimmen.

4. Kommunikationsvorrichtung nach Anspruch 1 oder 2, wobei, wenn die angesammelte Datenmenge gleich der zugeteilten oder kleiner als die zugeteilte Bandbreite ist,
die Logikverbindungssteuereinheit (15) dazu angepasst ist, eine Anzahl, die erhalten wird, indem eine voreingestellte positive ganze Zahl zur Anzahl aktuell verwendeter Verbindungen hinzuaddiert wird, als die Anzahl zu verwendender Verbindungen zu bestimmen.

5. Kommunikationsvorrichtung nach Anspruch 1, wobei die Logikverbindungssteuereinheit (15) dazu angepasst ist, eine Puffernutzungsrate, die auf Grundlage der angesammelten Datenmenge und einer Pufferkapazität der Datensammeleinheit berechnet ist, mit einem vorbestimmten Schwellenwert zu vergleichen.

6. Kommunikationsvorrichtung (1) nach Anspruch 5, wobei, wenn die angesammelte Datenmenge größer ist als die zugeteilte Bandbreite und die Anzahl aktuell verwendeter Verbindungen zwei oder mehr beträgt,
die Logikverbindungssteuereinheit (15) dazu angepasst ist, eine Anzahl, die erhalten wird, indem eine voreingestellte positive ganze Zahl von Anzahl aktuell verwendeter Verbindungen subtrahiert wird, als die Anzahl zu verwendender Verbindungen zu bestimmen.

7. Kommunikationsvorrichtung (1) nach Anspruch 5 oder 6, wobei, wenn die angesammelte Datenmenge gleich der zugeteilten oder kleiner als die zugeteilte Bandbreite ist, die Puffernutzungsrate geringer ist als ein vorbestimmter Schwellenwert, und die Anzahl aktuell verwendeter Verbindungen zwei oder mehr beträgt,
die Logikverbindungssteuereinheit (15) dazu angepasst ist, eine Anzahl, die erhalten wird, indem eine voreingestellte positive ganze Zahl von der Anzahl aktuell verwendeter Verbindungen subtrahiert wird, als die Anzahl zu verwendender Verbindungen zu bestimmen.

8. Kommunikationsvorrichtung nach einem der Ansprüche 5 bis 7, wobei es sich bei dem vorbestimmten Schwellenwert um einen Wert handelt, der auf Grundlage mindestens einer Information von einer Länge eines Zeitraums in einem Energiesparzustand, wenn ein Energiesparmodus eingestellt ist, einem garantierten Mindestbandbreitenparameter in einer Dienstgütevereinbarung, einem Verzögerungsklassenparameter in einer Dienstgütevereinbarung, und einer entsprechenden Netzaufwärtsübertragungsrate der Kommunikationsvorrichtung bestimmt ist.

9. Kommunikationsvorrichtung nach einem der Ansprüche 1 bis 8, wobei die Datensammeleinheit (12) dazu konfiguriert ist, mehrere Warteschlangen zu enthalten, für die eine Priorität gesetzt ist, und wobei die Kommunikationsvorrichtung (1) darüber hinaus umfasst:
eine Datenempfangseinheit (17, 18), die, wenn Upstream-Datenvon der auf niedrigerer Ebene angesiedelten Einrichtung (102) her eingehen, dazu angepasst ist, die empfangenen Upstream-Daten in einer der Warteschlangen in der Datensammeleinheit zu speichern; und
eine Datenübertragungseinheit (13, 14), die dazu angepasst ist, in der Datensammeleinheit angesammelte Upstream-Daten entsprechend einer bei den Warteschlangen gesetzten Priorität zu lesen und zu übertragen.

10. Kommunikationsvorrichtung nach einem der Ansprüche 1 bis 8, wobei die Datensammeleinheit (12) dazu konfiguriert ist, mehrere Pufferbereiche zu enthalten, die in einem Eins-zu-Eins-Verhältnis mit jeder jeweiligen in einer Datenübertragung zur stationsseitigen Einrichtung (3) zu verwendenden logischen Verbindung zugeordnet sind, und wobei die Kommunikationsvorrichtung (1) darüber hinaus umfasst:
eine Datenempfangseinheit (17, 18), die, wenn Upstream-Daten von der auf niedrigerer Ebene angesiedelten Einrichtung (102) her eingehen, dazu angepasst ist, die empfangenen Upstream-Daten in einem der Pufferbereiche in der Datensammeleinheit zu speichern; und
eine Datenübertragungseinheit (13, 14), die dazu angepasst ist, in der Datensammeleinheit (12) angesammelte Upstream-Daten durch eine Prozedur entsprechend einem Bestimmungsergebnis der durch die Logikverbindungssteuereinheit erfassten Anzahl zu verwendender Verbindungen zu lesen und zu übertragen, und wobei
die Datenübertragungseinheit (13, 14) dazu angepasst ist, jede aus der Datensammeleinheit ausgelesenen Daten einer entsprechenden Logikverbindung (12) zuzuteilen, und, wenn zu einem Zeitpunkt einer Zuteilung zu einer entsprechenden spezifischen Logikverbindung aller Teile der Upstream-Daten, die der spezifischen Logikverbindung entsprechen, eine überschüssige Bandbreite an der entsprechenden spezifischen Logikverbindung besteht, die überschüssige Bandbreite in der entsprechenden spezifischen Logikverbindung für eine Übertragung von Upstream-Daten zu verwenden, die einer anderen Logikverbindung entsprechen.

## Revendications

1. Dispositif de communication (1) d'un côté abonné qui, dans un système de communication point à multipoint, est apte à transmettre des données ascendantes transmises d'un appareil de niveau inférieur (102) à un appareil côté station (3) sur la base d'une heure de début de transmission de données et d'un temps de durée de transmission notifiés depuis l'appareil côté station (3), le dispositif de communication (1) comprenant :
une unité d'accumulation de données (12) qui est apte à accumuler des données ascendantes à transmettre à l'appareil côté station (3) ; et
une unité de commande de liaisons logiques (15) qui est apte à déterminer un nombre de liaisons à utiliser, qui est le nombre de liaisons logiques à utiliser pour une transmission de données ascendantes dans un prochain cycle de mise à jour de largeur de bande, sur la base d'une quantité de données accumulées dans l'unité d'accumulation de données (12),
sachant que l'unité de commande de liaisons logiques (15) est en outre apte à comparer la quantité de données accumulées avec une largeur de bande allouée qui est une largeur de bande ascendante allouée dans un cycle actuel de mise à jour de largeur de bande, régler un nombre de liaisons actuellement utilisées, qui est le nombre de liaisons logiques actuellement utilisées pour une transmission de données ascendantes dans le cycle actuel de mise à jour de largeur de bande, et désigner la valeur réglée comme étant le nombre de liaisons à utiliser.

2. Le dispositif de communication selon la revendication 1, dans lequel, lorsque la quantité de données accumulées est supérieure à la largeur de bande allouée et que le nombre de liaisons actuellement utilisées est de deux ou plus,
l'unité de commande de liaisons logiques (15) est apte à désigner un nombre obtenu par soustraction d'un entier positif prédéterminé du nombre de liaisons actuellement utilisées comme étant le nombre de liaisons à utiliser,

3. Le dispositif de communication selon la revendication 1 ou 2, dans lequel, lorsque la quantité de données accumulées est égale ou inférieure à la largeur de bande allouée,
l'unité de commande de liaisons logiques (15) est apte à désigner le nombre de liaisons actuellement utilisées comme étant le nombre de liaisons à utiliser.

4. Le dispositif de communication selon la revendication 1 ou 2, dans lequel, lorsque la quantité de données accumulées est égale ou inférieure à la largeur de bande allouée,
l'unité de commande de liaisons logiques (15) est apte à désigner un nombre obtenu par addition d'un entier positif prédéfini au nombre de liaisons actuellement utilisées comme étant le nombre de liaisons à utiliser.

5. Le dispositif de communication selon la revendication 1, dans lequel l'unité de commande de liaisons logiques (15) est apte à comparer un taux d'utilisation de tampon qui est calculé sur la base de la quantité de données accumulées et une capacité de tampon de l'unité d'accumulation de données, avec un seuil prédéterminé.

6. Le dispositif de communication (1) selon la revendication 5, dans lequel, lorsque la quantité de données accumulées est supérieure à la largeur de bande allouée et que le nombre de liaisons actuellement utilisées et de deux ou plus,
l'unité de commande de liaisons logiques (15) est apte à désigner un nombre obtenu par soustraction d'un entier positif prédéterminé du nombre de liaisons actuellement utilisées comme étant le nombre de liaisons à utiliser.

7. Le dispositif de communication (1) selon la revendication 5 ou 6, dans lequel, lorsque la quantité de données accumulées est égale ou inférieure à la largeur de bande allouée, que le taux d'utilisation de tampon est inférieur à un seuil prédéterminé, et que le nombre de liaisons actuellement utilisées est de deux ou plus,
l'unité de commande de liaisons logiques (15) est apte à désigner un nombre obtenu par soustraction d'un entier positif prédéterminé du nombre de liaisons actuellement utilisées comme étant le nombre de liaisons à utiliser.

8. Le dispositif de communication selon l'une quelconque des revendications 5 à 7, dans lequel le seuil prédéterminé est une valeur déterminée sur la base d'au moins un élément d'information parmi une longueur d'une période dans un état d'économie de puissance lorsqu'un mode d'économie de puissance est activé, un paramètre de largeur de bande minimum garanti dans un accord de niveau de service, un paramètre de classe de retard dans un accord de niveau de service, et un débit de transfert ascendant correspondant du dispositif de communication.

9. Le dispositif de communication selon l'une quelconque des revendications 1 à 8, dans lequel l'unité d'accumulation de données (12) est configurée pour inclure une pluralité de files d'attente pour lesquelles une priorité est définie, et le dispositif de communication (1) comprend en outre :
une unité de réception de données (17, 18) qui, lorsque des données ascendantes sont reçues depuis l'appareil de niveau inférieur (102), est apte à stocker les données ascendantes reçues dans une des files d'attente dans l'unité d'accumulation de données ; et
une unité de transmission de données (13, 14) qui est apte à lire et transmettre des données ascendantes accumulées dans l'unité d'accumulation de données selon une priorité définie dans les files d'attente.

10. Le dispositif de communication selon l'une quelconque des revendications 1 à 8, dans lequel l'unité d'accumulation de données (12) est configurée pour inclure une pluralité de zones tampons qui sont associées dans un rapport un à un à chaque liaison logique respective à utiliser dans une transmission de données à l'appareil côté station (3), et le dispositif de communication (1) comprend en outre :
une unité de réception de données (17, 18) qui, lorsque des données ascendantes sont reçues depuis l'appareil de niveau inférieur (102), est apte à stocker les données ascendantes reçues dans une des zones tampons dans l'unité d'accumulation de données ; et
une unité de transmission de données (13, 14) qui est apte à lire et transmettre des données ascendantes accumulées dans l'unité d'accumulation de données (12) moyennant une procédure selon un résultat de détermination du nombre de liaisons à utiliser acquis par l'unité de commande de liaisons logiques, et sachant que
l'unité de transmission de données (13, 14) est apte à allouer chaque donnée ascendante lue à partir de l'unité d'accumulation de données à une liaison logique (12) correspondante, et utiliser, lorsque, à une heure d'une allocation à une liaison logique spécifique correspondante de tous les éléments des données ascendantes correspondantes à la liaison logique spécifique, il existe une largeur de bande excédentaire de la liaison logique spécifique correspondante, la largeur de bande excédentaire dans la liaison logique spécifique correspondante pour une transmission de données ascendantes correspondantes à une autre liaison logique.
